**Europäisches Patentamt**

**European Patent Office**

**Office européen des brevets**

(19)

(11) Veröffentlichungsnummer: **0 006 127**
**B1**

(12) **EUROPÄISCHE PATENTSCHRIFT**

(45) Veröffentlichungstag der Patentschrift: **30.09.81**

(51) Int. Cl.³: **F 16 J 15/12**

(21) Anmeldenummer: **79101435.0**

(22) Anmeldetag: **10.05.79**

(54) Zylinderkopfdichtung und Verfahren zu ihrer Herstellung.

(30) Priorität: **16.06.78 DE 2826386**

(43) Veröffentlichungstag der Anmeldung:
**09.01.80 Patentblatt 80/1**

(45) Bekanntmachung des Hinweises auf die Patenterteilung:
**30.09.81 Patentblatt 81/39**

(84) Benannte Vertragsstaaten:
**DE FR GB IT**

(56) Entgegenhaltungen:
**DE - B - 2 435 957**
**FR - A - 1 538 222**

(73) Patentinhaber: **GOETZE AG**
**Bürgermeister-Schmidt-Strasse 17**
**D-5093 Burscheid 1 (DE)**

(72) Erfinder: **Majewski, Klaus-Peter**
**Am Sportplatz 26**
**D-5093 Burscheid 1 (DE)**
Erfinder: **Morsbach, Martin, Dr.**
**Bismarckstrasse 24**
**D-5093 Burscheid 1 (DE)**
Erfinder: **Schulz, Dietrich**
**Unterstrasse 71**
**D-5090 Leverkusen 1 (DE)**

Courier Press, Leamington Spa, England.

Zylinderkopfdichtung und Verfahren zu ihrer Herstellung.

Die Erfindung betrifft eine Zylinderkopfdichtung für Verbrennungskraftmaschinen, bestehend aus einer gegebenenfalls metallisch verstärkten Weichstoffplatte aus faserartigem und/oder porösem Material mit metallischen Einfassungen vorzugsweise rund um die Brennraumdurchgänge, von denen jeweils einer oder beide Schenkel in Richtung auf den Weichstoff abgewinkelt sind, sowie einer Imprägnation mit einem im Endzustand plastischen oder elastischen Tränkmittel, welches die Poren des Weichstoffes mit Ausnahme der Bereiche unterhalb der Einfassungen ganz oder teilweise ausfüllt.

Weichstoff - Zylinderkopfdichtung für Verbrennungskraftmaschinen bestehen in der Praxis meist aus Asbestfaservliesen, die gegebenenfalls durch eingelegte Rauhblechmetallplatten verstärkt sind. Insbesondere zur Erhöhung ihrer Festigkeits — und Dichitigkeitswerte werden solche Zylinderkopfdichtungen nach z. B. DE—B—23 04 557 mit im Endzustand plastischen oder elastischen Mitteln imprägniert.

Zylinderkopfdichtungen für hochbelastete Motoren sollen jedoch im Beriech der durch den Dichtpressungsdruck am meisten beanspruchten Zonen eine hohe Fließgrenze des Weichstoffmaterials besitzen. Der Dichtpressungsdruck ist dabei unter den Bördeln, welche vorzugsweise rund um die Brennraumdurchgänge angebracht sind, am größten, da hier die Dicke der Zylinderkopfdichtungen um die zweifache Dicke der Bördelbleche vergrößert ist. Da aber Imprägniermittel im Weichstoff dessen Fließgrenzen erniedrigen, werden nach der DE—B—23 04 505 deshalb die Bereiche unterhalb der Einfassungen frei von Imprägniermittel gehalten.

In der Praxis werden derartige Zylinderkopfdichtungen hergestellt, indem die fertig gestanzten und eingebördelten rohen Dichtungsplatten anschließend vorzugsweise durch Aufwalzen, Tauchen oder Aufsprühen imprägniert werden, und indem daran anschließend vorzugsweise durch Erhitzen das Imprägniermittel zu seiner plastischen oder elastischen Konsistenz vernetzt wird. Bei diesem relativ einfachen Verfahren sind die Bereiche unterhalb der Einfassungen zwar durch die Bördel abgedeckt, so daß dort kein Imprägniermittel eindringen sollte. Trotzdem aber kann es bei der Massenfertigung immer wieder vorkommen, daß bei einigen Zylinderkopfdichtungen Imprägniermittel unter die Einfassungen gelangt. So entsteht kostenverursachend ein Ausschuß an Zylinderkopfdichtungen, welch wegen einer zu niedrigen Fließgrenze des Weichstoffes unterhalb der Bördel, insbesondere für den Einsatz in sehr hoch belasteten Motoren, nicht geeignet sind.

Nach der DE—B—24 35 957 ist bereits vorgeschlagen worden, durch ein Abwinkeln der Bördelschenkelenden in den Weichstoff eine Sperre gegen einfließendes Imprägniermittel zu errichten. Wie jedoch in dieser Patentschrift beschrieben, wird auch so das Einfließen von Imprägniermittel gemäß Ausführungsbeispiel nicht völlig verhindert, und es entsteht in den Bereichen unterhalb der Einfassungen nur eine imprägniermittelarme Zone. Untersuchungen haben aber gezeigt, daß auch geringe Mengen Imprägniermittel die Fließgrenzen des Weichstoffes, und zwar im Verhältnis sogar stärker, herabsetzen, als wenn der Weichstoff vollständig imprägniert worden wäre.

Es ist daher die Aufgabe der vorliegenden Erfindung, eine Zylinderkopfdichtung zu schaffen, welche sich im eingebördelten rohen Zustand ausschußfrei imprägnieren läßt, so daß eine Zylinderkopfdichtung mit völliger Imprägniermittelfreiheit unter den Einfassungen entsteht.

Erfindungsgemäß wird diese Aufgabe durch eine Zylinderkopfdichtung gelöst, bei welcher jeweils einer oder beide Bördelschenkel in unmittelbarer Nähe der Bördelschenkelenden eine ringförmige Sicke aufweisen. Besonders einfach können diese ringförmigen Sicken dabei direkt nach der Montage der Einfassungen gleichzeitig während des angeschlossenen Planierungsvorganges in die Bördelschenkel eingeprägt werden. In diesem Fall haben die ringförmigen Sicken einen etwa V-förmigen Querschnitt.

Bei den zu der Erfindung führenden Untersuchungen wurde festgestellt, daß bisher verwendete Einfassungen mitnur etwa U-förmigem Querschnitt unter Umständen direkt nach der Montage und dem Planieren wieder nach Außen auffedern können, so daß durch den am Bördelschenkelende entstandenen Spalt Imprägniermittel einfließen kann, welches zunächst an der Innenseite der Einfassungen entlang kriecht und von dort sich in den Weichstoff hinein ausbreitet. Diese Zylinderkopfdichtungen, bei denen aufgrund des Auffederns Imprägniermittel unter die Einfassungen gelangt ist, haben dann in diesen Bereichen eine zu niedrige Fließgrenze und müssen als Ausschuß betrachtet werden. Bei Zylinderkopfdichtungen nach der DE—B—24 35 957 bilden zwar die vorgeschlagenen Einfassungen grundsätzlich eine Sperre gegen einfließendes Imprägniermittel. In diesem Fall können jedoch die scharfen abgewinkelten Kanten der Metalleinfassungen die Asbestfasermatrix beschädigen, welche dadurch an dieser Stelle ihr Rückfederungsvermögen teilweise verliert. Bei einem möglichen Auffedern der Einfassungen kann dann dort ein Spalt entstehen, durch de Imprägniermittel einfließen kann.

Durch die erfindugsgemäß in die Nähe der Bördelschenkelenden eingeprägten, sickenartigen Vertiefungen wird der darunterliegende Weichstoff völlig zerstörungsfrei komprimiert und erhält so ein hohes Rückfederungsvermögen, das größer ist als die Eigenrückfederung des Bördelbleches. Bei einem möglichen Auffedern der Einfassungen ist somit die generelle Bedingung für einen Kraftschluß zwischen Bördel und Asbest im Bereich der Sicke erfüllt. Aufgrund dieser kraftschlüssigen Verbindung von Weichstoff und Einfassungsblech kann auch bei dem möglichen Auffedern der Bördel bei der nachfolgenden Imprägnierung Imprägniermittel bis höchstens zur Vertiefung vordringen, die entstandenen Zylinderkopfdichtungen behalten in den Bereichen unterhalb der Einfassungen die geforderten hohen Fließgrenzen und sind auch in hochbelasteten Verbrennungskraftmaschinen einsetzbar. Die Sicken sind ferner in das Bördelblech in einem einfachen Verfahrensschritt einprägbar, so daß dadurch die Fertigungskosten der erfindungsgemäßen Zylinderkopfdichtung zusätzlich zur Ausschußsenkung noch weiter verringert werden.

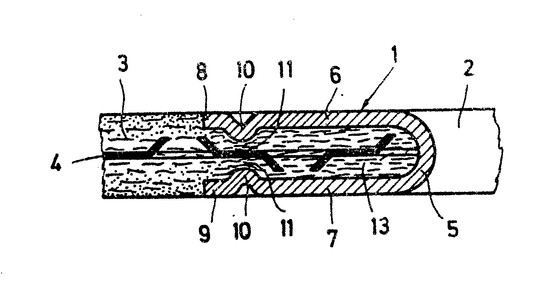

Die Erfindung sei anhand einer Abbildung näher erläutert, und zwar zeigt die Figur den Querschnitt durch eine Zylinderkopfdichtung 1 im brennraumbenachbarten Bereich 2, bestehend aus einer Asbestfaservliesplatte 3 mit einer eingelegten metallischen Verstärkungsplatte 4 und einer metallischen Einfassung 5. Die Bördelschenkel 6,7 sind an ihren Enden 8,9 eingeprägt, so daß Sicken von etwa V-förmigem Querschnitt entstanden sind. Der Weichstoff 11 unterhalb der Sicke 10 ist stark komprimiert. Durch die nachfolgende Imprägnierung ist der Restflächenbereich des Weichstoffes zu etwa 2/3 seines Querschnittes mit Imprägniermittel ausgefüllt, während der Bereich 13 des Weichstoffes unterhalb der Einfassung 5 absolut frei von Imprägniermittel ist.

**Patentansprüche**

1. Zylinderkopfdichtung für Verbrennungskraftmaschinen, bestehend aus einer gegebenenfalls metallisch verstärkten Weichstoffplatte aus faserartigem und/oder porösem Material mit metallischen, vorzugsweise rund um die Brennraumdurchgänge verlaufenden Einfassungen, von welchen jeweils einer oder beide Schenkel in Richtung auf den Weichstoff abgewinkelt sind, sowie einer Imprägnation mit einem im Einbauzustand plastischen oder elastischen Tränkmittel, welches die Poren des Weichstoffes mit Ausnahme der Bereiche unterhalb der Einfassungen ganz oder teilweise ausfüllt, dadurch gekennzeichnet, daß sich die Abwinkelungen der Bördelschenkel (6,7) als ringförmige Sicken (10) in unmittelbarer Nähe der Bördelschenkelenden (8,9) forsetzen.

2. Zylinderkopfdichtung nach Anspruch 1, dadurch gekennzeichnet, daß die ringförmigen Sicken (10) einen etwa V-förmigen Querschnitt besitzen.

3. Verfahren zur Herstellung der Zylinderkopfdichtung nach Anspruch 1 oder 2, dadurch gekennzeichnet, daß die ringförmigen Sicken (10) direkt nach der Montage der Bördel (5) in die Bördelschenkel (6,7) während des Planierens einge--prägt werden.

**Claims**

1. Cylinder head gasket for internal combustion engines composed of, if necessary, a metallic reinforced disc of fibrous and/or porous soft material and a metallic casing surrounding preferably the openings for the combustion chambers in which at least one arm of the metallic casing is angled in the direction toward the soft material and a saturating agent which is plastic or elastic when installed and which fills the pores of the soft material partly or completely except the region underneath the casing, whereby the angled portion of the casing arms (6,7) has the configuration of an annular recess (10) in the immediate vicinity of the ends of the flange arms (8,9).

2. Cylinder head gasket as defined in claim 1, whereby the annular recesses (10) have an approximately V-shaped cross section.

3. Method for producing the cylinder head gasket as defined in claim 1 or 2, whereby the annular recesses (10) are stamped in the arms of the casings (6,7) immediately after installing and during the smoothing operation of the casings (5).

**Revendications**

1. Joint du culasse pour moteurs à combustion interne, composé d'une plaque en matière tendre, éventuellement renforcée métalliquement, et matière fibreuse et/ou poreuse, avec des bordures métalliques, de préférence tout autour des orifices des chambres de combustion, dont l'une ou chacune des deux aîles sont angulairement inclinées en direction de la matière tendre, ainsi que d'une imprégnation au moyen d'un agent d'imprégnation plastique ou élastique dans son état monté, remplissant totalement ou partiellement les pores de la matière tendre à l'exception des zones situées en dessous des bordures, caractérisé en ce que les parties angulairement inclinées des ailes (6,7) des bordages se continuent sous forme de moulures annulaires (10) au voisinage immédiat des extrémitiés (8,9) des ailes de bordages.

2. Joint de culasse selon la revendication 1, caractérisé en ce que les moulures annulaires (10) au voisinge immédiat des extrémités mativement en forme de V.

3. Procédé de réalisation du joint de culasse selon la revendication 1 ou 2, caractérisé en ce que les moulures annulaires (10) son imprimés dans les ailes du bordage (6,7) directement après le montage du bordage (5) pendant le planage.